# EUROPÄISCHE PATENTSCHRIFT

(11) **EP 4 423 636 B1**
(45) Veröffentlichungstag und Bekanntmachung des Hinweises auf die Patenterteilung: **03.12.2025**
(21) Anmeldenummer: 22800086.5
(22) Anmeldetag: 18.10.2022
(51) Int. Cl.: G06F 21/31

(54) **AUTORISIEREN EINER ANWENDUNG AUF EINEM SICHERHEITSELEMENT**
AUTHORIZING AN APPLICATION ON A SECURITY ELEMENT
AUTORISATION D'UNE APPLICATION SUR UN ÉLÉMENT DE SÉCURITÉ

(30) Priorität: 27.10.2021 DE 102021005351
(43) Veröffentlichungstag der Anmeldung: 04.09.2024
(73) Patentinhaber: Giesecke+Devrient ePayments GmbH, 81677 München (DE)
(72) Erfinder: GIBIS, Oliver, 81825 München (DE); NESS, Werner, 85716 Unterschleissheim (DE); SUMMERER, Alexander, 85586 Poing (DE)
(74) Vertreter: LKGLOBAL Lorenz & Kopf Patentanwalt Attorney at Law PartG mbB
(86) Internationale Anmeldenummer: PCT/EP2022/000096
(87) Internationale Veröffentlichungsnummer: WO 2023/072422

(56) Entgegenhaltungen:
- EP-A2- 1 189 128
- US-A1- 2018 232 506

## Beschreibung

Die vorliegende Erfindung betrifft ein Verfahren zum Autorisieren einer auf einem Sicherheitselement installierten Anwendung, sowie eine entsprechende Vorrichtung mit einem Sicherheitselement und einem Benutzerverifikationselement.

Es sind mobile Vorrichtungen bekannt, die für digitale Transaktionen eingesetzt werden können, etwa für digitales Bezahlen oder dergleichen. Derartige Vorrichtungen können beispielsweise als Uhren oder Schlüsselanhänger ausgeführt sein, aber auch als Telekommunikationsendgeräte, wie etwa Mobiltelefone oder dergleichen. Häufig ist es vorteilhaft, diese Vorrichtungen mit einer Möglichkeit zur Benutzerverifikation auszustatten, beispielsweise mittels einer biometrischen Prüfung, um Transaktionen abzusichern.

US 2018/232506 A1 befasst sich mit Techniken zur Verbesserung der Leistung eines Touchscreen-Geräts. In einer Ausführungsform empfängt das Touchscreen-Gerät eine Auswahl einer Anwendung oder Funktion basierend darauf, dass ein Benutzer einen Teil eines Touchscreen-Displays des Touchscreen-Geräts berührt, der ein Symbol enthält, das die Anwendung oder Funktion darstellt, sammelt biometrische Daten des Benutzers basierend darauf, dass der Benutzer den Teil des Touchscreen-Displays berührt, und bestimmt basierend auf den biometrischen Daten, ob der Benutzer zum Zugriff auf die Anwendung oder Funktion autorisiert ist. In einer Ausführungsform erkennt das Touchscreen-Gerät, dass ein Teil des Touchscreen-Displays nicht auf Berührungseingaben des Benutzers reagiert, und verschiebt als Reaktion auf diese Erkennung mindestens ein auf dem nicht reagierenden Teil des Touchscreen-Displays angezeigtes Symbol in einen Teil des Touchscreen-Displays, der auf Berührungseingaben des Benutzers reagiert.

Allerdings können die für eine Transaktion erforderlichen Applikationen bzw. Anwendungen, die häufig auf den betreffenden Sicherheitselementen installiert sind und von diesen ausgeführt werden, nicht durch den Hersteller der Vorrichtungen modifiziert werden, etwa weil dies Zertifizierungs- oder andere Sicherheitsanforderungen nicht zulassen.

In anderen Fällen werden die Anwendungen als Binärcode von Drittanbietern bereitgestellt und der Quellcode liegt dem Hersteller der genannten Vorrichtungen gar nicht vor. Für das Absichern von Transaktionen muss daher etwa der Drittanbieter mit einer entsprechenden Modifikation beauftragt werden, was regelmäßig dazu führt, dass Anwendungen zusätzlich oder erneut zertifiziert werden müssen, was erhebliche Kosten und Zeitaufwand verursacht.

Es ist insofern die Aufgabe der vorliegenden Erfindung, eine Lösung vorzuschlagen, die die oben genannten sowie weitere Nachteile des Standes der Technik überwindet.

Gelöst wird diese Aufgabe durch ein Verfahren sowie eine Vorrichtung gemäß den unabhängigen Ansprüchen. In den abhängigen Ansprüchen werden weitere Ausgestaltungen und bevorzugte Ausführungsformen der Erfindung angegeben.

Das erfindungsgemäße Verfahren betrifft ein Autorisieren einer auf einem Sicherheitselement einer Vorrichtung installierten Anwendung und umfasst mehrere Schritte: Gemäß einem ersten Schritt werden Autorisierungsinformationen von einem Benutzerverifikationselement der Vorrichtung an das Sicherheitselement übertragen. In einem zweiten Schritt werden die Autorisierungsinformationen gegenüber zumindest einer Anforderung einer Liste auf dem Sicherheitselement abgeglichen. Gemäß zumindest einem weiteren Schritt wird die betreffende Anwendung auf dem Sicherheitselement zur Ausführung selektiert und/oder es wird eine Transaktion mittels der Anwendung durchgeführt, sofern die Autorisierungsinformationen die Anforderungen der Liste erfüllen.

Die derart definierte Erfindung erlaubt eine flexible Kontrolle darüber, welche Transaktion mit welcher Anwendung unter welchen Bedingungen ausgeführt wird bzw. ausgeführt werden darf. Für bereits im Feld existierende Sicherheitselemente mit Anwendungen ermöglicht die Erfindung, diese mit einem Zugriffs- und Transaktionsschutz zu versehen, ohne deren Quellcode oder Binärcode zu verändern und ohne eine Neuinstallation durchzuführen.

Die erfindungsgemäße Vorrichtung ist entsprechend ausgestattet und eingerichtet, um die erfindungsgemäße Autorisierung der auf dem Sicherheitselement installierten Anwendung zu prüfen. Dazu umfasst die erfindungsgemäße Vorrichtung ein Benutzerverifikationselement und ein Sicherheitselement mit der darauf installierten Anwendung. Das Benutzerverifikationselement ist eingerichtet, Autorisierungsinformationen an das Sicherheitselement zu übertragen, und das Sicherheitselement ist wiederum eingerichtet, die Autorisierung der Anwendung dadurch vorzunehmen, dass die von dem Benutzerverifikationselement empfangenen Autorisierungsinformationen gegenüber zumindest einer Anforderung einer Liste abgeglichen wird und dann, sofern die Autorisierungsinformationen die zumindest eine Anforderung der Liste erfüllt, die Anwendung zu selektieren und/ oder eine Transaktion mit Hilfe der Anwendung auszuführen. Insbesondere ist die erfindungsgemäße Vorrichtung geeignet ausgestattet und eingerichtet, um das erfindungsmäße Verfahren in allen offenbarten Ausführungsformen und Ausführungsvarianten auszuführen.

Der Begriff des Abgleichens der Autorisierungsinformation gegenüber einer Anforderung der Liste ist im Rahmen der vorliegenden Erfindung als Prüfung zu verstehen, ob entweder die Autorisierungsinformation in der Liste verzeichnet ist oder ob Einträge der Liste die Autorisierungsinformation in anderer Weise mittelbar oder unmittelbar identifizieren, adressieren, oder bezeichnen. Insbesondere können die Anforderungen, gegenüber denen die Autorisierungsinformation abzugleichen ist, Bedingungen repräsentieren oder umfassen, die die Autorisierungsinformation erfüllen muss, damit die Anwendung autorisiert ist, zu autorisieren ist oder autorisiert werden kann.

Vorzugsweise umfasst das erfindungsgemäße Verfahren den Schritt des Bereitstellens der genannten Vorrichtung mit Sicherheitselement und Benutzerverifikationselement. Hierbei ist das Benutzerverifikationselement vorzugsweise ein Element der Vorrichtung, in der es gemeinsam mit dem Sicherheitselement baulich integriert ist.

Daneben kann das Verfahren aber auch noch zumindest ein weiteres Benutzerverifikationselement betreffen, welches separat von der Vorrichtung realisiert ist und mit dieser über geeignete, zum Beispiel kontaktlose, Datenkommunikationskanäle verbunden ist. Über einen solchen Datenkommunikationskanal kann das Sicherheitselement im Rahmen des erfindungsgemäßen Verfahrens weitere oder ergänzende Autorisierungsinformationen von dem zumindest einen weiteren Benutzerverifikationselement empfangen, die ebenfalls zur Prüfung der Autorisierung der Anwendung genutzt wird.

Vorzugsweise wird die Liste als Blacklist bereitgestellt. Diese Blacklist umfasst vorzugsweise Anforderungen, die Autorisierungsinformationen im Rahmen des Abgleichs erfüllen müssen, damit die betreffende Anwendung auf dem Sicherheitselement selektiert und/oder eine Transaktion mit Hilfe der Anwendung durchgeführt werden kann. Insbesondere umfasst die Blacklist Ausschlussanforderungen, so dass die betreffende Anwendung nur dann selektiert wird und/oder die Transaktion mit Hilfe der Anwendung durchgeführt wird, wenn der Abgleich ergibt, dass die Autorisierungsinformationen keiner der in der Blacklist verzeichneten Ausschlussanforderungen entsprechen.

Insbesondere wird die Liste als Protection-Trigger-Liste bereitgestellt. Diese Protection-Trigger-Liste umfasst vorzugsweise Anforderungen, insbesondere Triggerkriterien, die vorgeben, unter welchen Bedingungen welche Anwendungskommandos von dem Sicherheitselement ausgeführt werden können, wie etwa ein SELECT-Kommando oder ein GPO-Kommando. Beispielsweise ist die Ausführung eines bestimmten Anwendungskommandos, etwa eines SELECT-Kommandos, nur dann erlaubt, wenn die erfindungsgemäßen Autorisierungsinformationen mindestens eine Anforderung der Protection-Trigger-Liste erfüllen.

Eine Anforderung der Liste kann beispielsweise sein, dass die Autorisierungsinformationen einen spezifischen sicherheitsrelevanten Status betreffen oder umfassen, etwa einen Benutzerverifikationsstatus. Ein Benutzerverifikationsstatus im Sinne der vorliegenden Erfindung ist ein mit einem Benutzer der erfindungsgemäßen Vorrichtung oder des Sicherheitselements bzw. mit dessen Identität verknüpfter Sicherheitsstatus oder Privilegien bzw. Rechte im Zusammenhang mit dem Sicherheitselement oder den Anwendungen.

Die Liste gibt dann Sicherheitsanforderungen vor, denen ein Benutzer genügen, bzw. Privilegien oder Rechte, die ein Benutzer im Wege der Autorisierungsinformationen nachweisen muss, damit eine Anwendung selektiert oder eine Transaktion ausgeführt werden kann. Falls eine Anforderung einen positiven Benutzerverifikationsstatus zum Selektieren einer spezifischen Anwendung erfordert, so müssen die betreffenden Autorisierungsinformationen mit einem positiven Benutzerverifikationsstatus verknüpft sein, oder diesen umfassen oder anderweitig betreffen, damit auf Betreiben des Benutzers die gewünschte Anwendung selektiert werden kann. Andernfalls wird die Selektion der Anwendung durch das Sicherheitselement verweigert.

Im Zusammenhang mit dem erfindungsgemäßen Abgleichen der Autorisierungsinformationen wird vorzugsweise zusätzlich geprüft, ob die zu selektierende Anwendung in einer AID-Liste enthalten ist bzw. von dieser in anderer Weise identifiziert wird. Jede auf dem Sicherheitselement installierte Anwendung weist vorzugsweise eine eindeutige Anwendungsidentifikation ("application identifier") auf, die AID. Die AID-Liste umfasst vorzugsweise die AIDs aller Anwendungen, für welche besondere Beschränkungen gelten, etwa also Schutz gegen Selektieren oder Ausführen bestimmter Transaktionen. Während also die AID-Liste Angaben dazu vorhält, welche Anwendungen prinzipiell geschützt sind, betrifft beispielsweise eine Blacklist oder anderweitige erfindungsgemäße Liste die konkreten Anforderungen, beispielsweise das Vorliegen eines bestimmten Benutzerverifikationsstatus oder dergleichen. Wenn beispielsweise eine Anwendung selektiert oder eine Transaktion mit der Anwendung ausgeführt werden soll, stellt das Sicherheitselement anhand der AID-Liste fest, ob ein Ausführungsschutz vorliegt und deshalb zusätzlich eine Blacklist oder anderweitige erfindungsgemäße Liste zu konsultieren ist, welche die geltenden Anforderungen nennt.

Neben individuellen, etwa anwendungs- oder kundenspezifischen Listen können im Rahmen des Betriebssystems des Sicherheitselements Standardlisten bereitgestellt werden, etwa eine Standard-Blacklist ("default blacklist"). Diese Standard-Blacklist enthält vorzugsweise diejenigen Kommandos, für die bestimmte Anforderungen erfüllt werden müssen, sowie die spezifischen Anforderungen für dieses Kommando. Beispielsweise kann die Standard-Blacklist nur das SELECT-Kommando betreffen, welches nur dann ausgeführt werden kann, wenn ein bestimmter Benutzerverifikationsstatus vorliegt. In diesem Fall kann eine in der AID-Liste verzeichnete Anwendung nur dann selektiert werden, wenn die betreffenden Autorisierungsinformationen diesen Benutzerverifikationsstatus betreffen. Wenn keine AID-Liste vorliegt, gelten die von der Standard-Blacklist vorgegebenen Anforderungen für alle auf dem Sicherheitselement installierten Anwendungen. Eine fehlende AID-Liste ist also vorzugsweise gleichbedeutend mit einer AID-Liste, die alle installierten Anwendungen nennt.

Vorzugsweise ist auf dem Sicherheitselement eine Vermittlungsanwendung installiert, auch Broker-Applikation genannt, die die Schritte des Abgleichens der Autorisierungsinformationen sowie des Selektierens von Anwendungen ausführt und/oder des Durchführens von Transaktionen initiiert. Zu diesem Zweck speichert die Vermittlungsanwendung die Autorisierungsinformationen zumindest teilweise in einem geeigneten Speicher, um sie anschließend gegenüber den Anforderungen der Liste abzugleichen und gegebenenfalls für spätere Selektionen von Anwendungen oder Ausführungen von Transaktionen zu verwenden. Beispielsweise kann auf einen festgestellten, sicherheitsrelevanten Benutzerverifikationsstatus für eine bestimmte Zeitdauer zurückgegriffen werden, bevor er erneut geprüft werden muss.

Vorzugsweise wird der Benutzerverifikationsstatus mit Hilfe eines Sensors erzeugt, insbesondere mit Hilfe eines biometrischen Sensors, indem der Sensor biometrische Daten als Grundlage für die Ermittlung des Benutzerverifikationsstatus erzeugt. Vorzugsweise wird hierfür ein Fingerabdrucksensor verwendet. Alternativ oder zusätzlich können andere oder weitere Sensoren eingesetzt werden, die ergänzende biometrische Daten erheben. Dadurch kann der Benutzerverifikationsstatus einfach ermittelt werden, weil der Benutzer keine besonderen Gegenstände besitzen oder Kenntnisse nachweisen muss.

Das Benutzerverifikationselement ist mit dem Sicherheitselement über eine vorzugsweise kryptographisch gesicherte bzw. verschlüsselte Datenkommunikationsverbindung verbunden und führt die Benutzerverifikation mit Hilfe von Sensordaten eines geeigneten Sensors durch, etwa eines Fingerabdrucksensors.

Der auf diese Weise ermittelte Benutzerverifikationsstatus wird an das Sicherheitselement zum dortigen Abgleich mit den Anforderungen der Liste durch die Vermittleranwendung übertragen.

Dabei greift das Betriebssystem des Sicherheitselements auf die Liste(n) der Vermittleranwendung zu, etwa eine AID-Liste und/oder eine Blacklist oder eine Protection-Trigger-Liste. Diese Listen werden dazu in einem vorgegebenen Speicherabschnitt des Sicherheitselements bereitgestellt. Das Betriebssystem wendet die Anforderungen und Bedingungen der Listen an, wenn ein Kommando empfangen wird. Das Betriebssystem erlaubt die Selektion der Anwendung und/oder die Ausführung der Transaktion, wenn das Kommando die entsprechenden Anforderungen erfüllt. Anschließend setzt das Sicherheitselement vorzugsweise den Benutzerverifikationsstatus zurück, sodass ohne erneute Prüfung keine weitere Selektion und/ oder Transaktionsausführung möglich ist.

Vorzugsweise umfasst der Sensor einen Sensorcontroller oder es ist dem Sensor ein Sensorcontroller des Benutzerverifikationselements zugeordnet. Der Sensorcontroller ist vorzugsweise eingerichtet, zu ermitteln, ob sich aus den erhobenen Sensordaten ein vorgegebener, zum Beispiel positiver Benutzerverifikationsstatus ergibt, und den Benutzerverifikationsstatus an einen Verifikationscontroller weiterzuleiten, welcher mit den Sicherheitselement und insbesondere mit dem Vermittleranwendung interagiert.

Der Sensorcontroller, vorzugsweise als Fingerabdruck-Controller ausgestaltet, kann gemäß einer Ausführungsvariante unabhängig von den übrigen Komponenten bestimmen, ob ein Benutzer durch die ihn betreffenden Sensordaten verifiziert werden kann. Ein derart spezialisierter Sensorcontroller kann insbesondere bei einem biometrischen Sensor den Verifikationscontroller entlasten, was einen niedrigeren Energiebedarf und längere Batterielaufzeiten zur Folge hat.

Vorzugsweise werden die Vermittleranwendung des Sicherheitselements, der Verifikationscontroller und/oder der Sensorcontroller mittels geeigneter Personalisierungsdaten vorpersonalisiert, welche vorzugsweise einen kryptographischen Schlüsselsatz zum Sichern der Datenkommunikation umfassen. Bei der Vorpersonalisierung wird dieser Schlüsselsatz in den genannten Komponenten abgespeichert. Alternativ bzw. ergänzend kann ein Schlüsselsatz zur Kommunikation zwischen Sensorkontroller und Verifikationscontroller und ein weiterer Schlüsselsatz zur Kommunikation zwischen Verifikationscontroller und Vermittleranwendung eingesetzt werden.

Vorzugsweise werden die zwischen dem Verifikationscontroller, der Vermittleranwendung des Sicherheitselements und/oder dem Sensorcontroller ausgetauschten Informationen, etwa die Autorisierungsinformationen, verschlüsselt übertragen und/ oder zumindest teilweise mit Nachrichtenauthentifizierungscodes gesichert. Dadurch werden Manipulationen zum Beispiel des Benutzerverifikationsstatus verhindert.

Vorzugsweise wird der Benutzerverifikationsstatus von dem Verifikationscontroller an die Vermittleranwendung gemäß eines Sicherheitsprotokolls übermittelt, etwa gemäß einem Challenge-Response-Verfahren. Dadurch werden Manipulationen des Benutzerverifizierungsstatus verhindert, beispielsweise durch logische Angriffe einer Schadsoftware im Verifikationscontroller oder physische Angriffe auf Kabelverbindungen zwischen den Komponenten. Diese Maßnahmen ermöglichen eine sichere Kommunikation über unsichere Komponenten der erfindungsgemäßen Vorrichtung hinweg.

Vorzugsweise verfügt die Vermittleranwendung über eine Liste von Kommandos, in deren Folge der Benutzerverifikationsstatus zurückgesetzt wird. Vorzugsweise hat die Vermittleranwendung für jede Anwendung, die einen vorgegebenen Benutzerverifikationsstatus benötigt, Zugriff auf die Liste dieser Kommandos.

Das Sicherheitselement führt Transaktionen in der Regel mittels einer geeigneten Sende- und Empfangseinrichtung am Sicherheitselement oder Verifikationscontroller kontaktlos durch, etwa mittels eines NFC- oder Bluetooth-Moduls mit Antenne.

Vorzugsweise werden Authentisierungstransaktionen, Bezahltransaktionen und/oder Zugangstransaktion erfindungsgemäß autorisiert. Mittels einer Authentisierungstransaktion wird beispielsweise ein Benutzer authentisiert, der zuvor verifiziert wurde, so dass der Benutzer etwa eine Bezahltransaktion durchführen und/oder Zugang zu einem System oder Objekt erlangen kann.

Gemäß einigen Ausführungsformen hat die erfindungsgemäße Vorrichtung die Form eines Schlüsselanhängers, insbesondere ist sie ein "Key Fob" mit integriertem Fingerabdrucksensor.

Vorzugsweise detektiert der Verifikationscontroller, ob der Benutzer eine Benutzerverifikation durchführen will. In diesem Fall fordert der Verifikationscontroller eine Challenge von der Vermittlungsanwendung an, etwa eine Zufallszahl, welche vorzugsweise mit einem Nachrichtenauthentifizierungscode geschützt ist, zum Beispiel mittels eines HMAC-Codes.

Der Sensorcontroller überprüft dann die Integrität der Challenge mit Hilfe des Nachrichtenauthentifizierungscodes und führt im Falle der vorliegenden Integrität eine Benutzerverifikation durch und ermittelt einen Benutzerverifikationsstatus. Anschließend übermittelt der Sensorcontroller den verschlüsselten und gesicherten Benutzerverifikationsstatus an den Verifikationscontroller, welcher diesen an die Vermittleranwendung weiterleitet, welche den Benutzerverifikationsstatus entschlüsselt und abspeichert, wenn der zugehörige Nachrichtenauthentifizierungscode als korrekt erkannt wird. Das Betriebssystem des Sicherheitselements kann auf den derart gespeicherten Benutzerverifikationsstatus zugreifen und erlaubt im Falle eines positiven Benutzerverifikationsstatus die Selektion der Anwendung und/ oder die Ausführung der betreffenden Transaktion durch die Anwendung.

Weitere Merkmale und Vorteile der Erfindung ergeben sich aus der folgenden Beschreibung erfindungsgemäßer Ausführungsbeispiele sowie weiterer Ausführungsalternativen im Zusammenhang mit den Zeichnungen, die zeigen:
- Fig. 1: eine erste Ausführungsform der erfindungsgemäßen Vorrichtung;
- Fig. 2: eine zweite Ausführungsform der erfindungsgemäßen Vorrichtung;
- Fig. 3: eine dritte Ausführungsform der erfindungsgemäßen Vorrichtung; und
- Fig. 4: das erfindungsgemäße Verfahren.

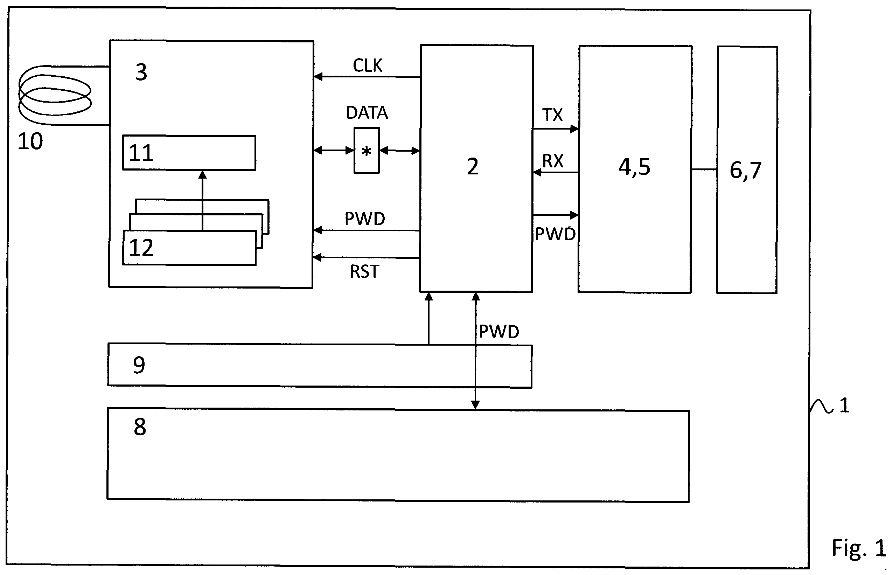

Fig. 1 zeigt eine Vorrichtung 1 mit einem Verifikationscontroller 2, der als BLE-Controller ausgeführt sein kann, beispielsweise als Bluetooth Low Energy Controller DIALOG BLE 5.0 DA14683 (WL-CSP53). Die Vorrichtung 1 weist ein Sicherheitselement 3 auf, z.B. eine Chipkarte, Smart Card, eSE, eUICC-Karte oder dergleichen, etwa einen Infineon Chip SLE78 mit einem G+D Sm@rt Cafe Betriebssystem. Die Vorrichtung 1 umfasst weiter einen Sensorcontroller 4, insbesondere einen Fingerabdruckcontroller 5, etwa einen Nuvoton NuMicro M480, sowie einen Sensor 6, etwa einen Fingerabdrucksensor 7.

Der BLE-Verifikationscontroller 2 ist gemäß der Ausführungsform nach Fig. 1 der Hauptprozessor und routet alle Datenkommunikation über den BLE-Kanal zum Fingerabdruckcontroller 5 (TX/RX) und weiter zum Sicherheitselement 3. Fig. 1 zeigt in diesem Zusammenhang eine Datenverbindung DATA und Leitungen RST und CLK zwischen dem Verifikationscontroller 2 und dem Sicherheitselement 3 bzw. dem Sensorcontroller 4, ebenso wie Datenverbindungen TX ("transmit") und RX ("receive").

Der Verifikationscontroller 2 wird durch eine Batterie 8 mit Strom versorgt, etwa eine Lithium-Ionen-Batterie. Der Verifikationscontroller 2 versorgt die weiteren Komponenten der Vorrichtung 1 mit Strom (PWD), insbesondere das Sicherheitselement 3 und den Sensorcontroller 4. Zudem ist ein Leistungsschaltkreis 9 ("Power Switch Circuit") mit dem Verifikationscontroller 2 verbunden. Auf dem Sicherheitselement 3 sind Anwendungen 12 (z.B. JavaCard Applets und/oder qVSDC) installiert, die entweder über den Verifikationscontroller 2 kontaktbasiert oder über die angeschlossene Antenne 10 kontaktlos kommunizieren.

Der Fingerabdrucksensor 7 übermittelt biometrische Daten an den Fingerabdruckcontroller 5, welcher feststellt, ob der betreffende Benutzer anhand der Daten verifiziert werden kann. Der entsprechende Benutzerverifikationsstatus wird dann verschlüsselt an den Verifikationscontroller 2 und von dort weiter als Autorisierungsinformationen an die Vermittleranwendung 11 auf dem Sicherheitselement 3 übertragen. Durch die Verschlüsselung werden Manipulationen weitgehend ausgeschlossen, beispielsweise durch logische Angriffe einer Schadsoftware im Verifikationscontroller oder durch physische Angriffe, etwas Bit-Manipulationen an Schwachstellen, wie den Kabelverbindungen zwischen Fingerabdruckcontroller 5 und Verifikationscontroller 2 und Sicherheitselement 3.

Insbesondere sieht die Vorrichtung ein Challenge-Response-Sicherheitsprotokoll ("Key Fob Fingerprint Security Protocol") zur Sicherung der Übertragung des Benutzerverifikationsstatus über unsichere Systemkomponenten vor, wie den BLE-Controller oder die Kabelverbindungen der Vorrichtung 1.

Die Vorrichtung 1 weist im Sicherheitselement 3 eine Vermittleranwendung 11 auf, die den Benutzerverifikationsstatus gemäß dem Sicherheitsprotokoll als Autorisierungsinformationen entgegennimmt und abspeichert. Sobald eine Anwendung 12 selektiert wird oder eine Transaktion mit dieser durchgeführt wird, prüft das Betriebssystem 14 des Sicherheitselements 3 den Benutzerverifikationsstatus und lässt die Selektion bzw. Transaktion nur bei positivem Benutzerverifikationsstatus zu. Die Vermittleranwendung 11, das sogenannte Broker-Applet, hat Zugriff auf eine AID-Liste, die vorgibt, welche Anwendungen 12 durch eine Benutzerverifikation geschützt werden, sowie Regeln umfasst, die zum Beispiel festlegen, ab welchem Befehl eine neue Selektion unzulässig ist. Nach erfolgter Transaktion setzt das Sicherheitselement 3 den Benutzerverifikationsstatus zurück, sodass eine weitere Transaktion, etwa eine Selektion der Anwendung, ohne erneute Benutzerverifikation nicht möglich ist.

Insbesondere ermöglich die Vermittleranwendung 11 die Definition folgende Listen:
- eine AID-Liste aller Anwendungen 12 im Sicherheitselement 3, die mit einer Benutzerverifikation geschützt werden sollen;
- eine Blacklist, insbesondere eine Protection-Trigger-Liste, die die Anforderungen spezifiziert, die bei einem Kommando erfüllt werden müssen. Beispielsweise kann für ein bestimmtes Kommando ein positiver Benutzerverifikationsstatus erforderlich sein; und
- eine Befehlsliste für jede geschützte Anwendung 12, bei deren Ausführung der Benutzerverifikationsstatus zurückgesetzt bzw. eine weitere Selektion verhindert wird. Falls diese Liste nicht existiert oder keine Befehle umfasst, wird der Benutzerverifikationsstatus sofort nach der Selektion der zu schützenden Anwendung 12 zurückgesetzt und dadurch eine weitere Selektion verhindert. Die Befehlsliste ermöglicht die gezielte Definition des Endes einer Transaktion. Falls zum Beispiel eine Transaktion zwei Selektionen erfordert, kann die Befehlsliste einen Befehl verzeichnen, bei dem die Transaktion terminiert wird.

Das Betriebssystem 14 des Sicherheitselements 3 wertet Regeln der Vermittleranwendung 11 aus, die zum Beispiel in Form von Listen vorliegen, und wendet diese Regeln an, indem eine Selektion, etwa eine JavaCard-Applet-Selektion, zum Beispiel durch einen Bezahltermin zugelassen oder verweigert wird.

Die Vermittleranwendung 11, der Fingerabdruckcontroller 5 und der Verifikationscontroller 2 werden bei der Herstellung der Vorrichtung 1 innerhalb einer abgesicherten Umgebung mit dem Schlüsselsatz EncKeyID und MacKeyID für das Sicherheitsprotokoll "Key Fob Fingerprint Security Protocol" vorpersonalisiert.

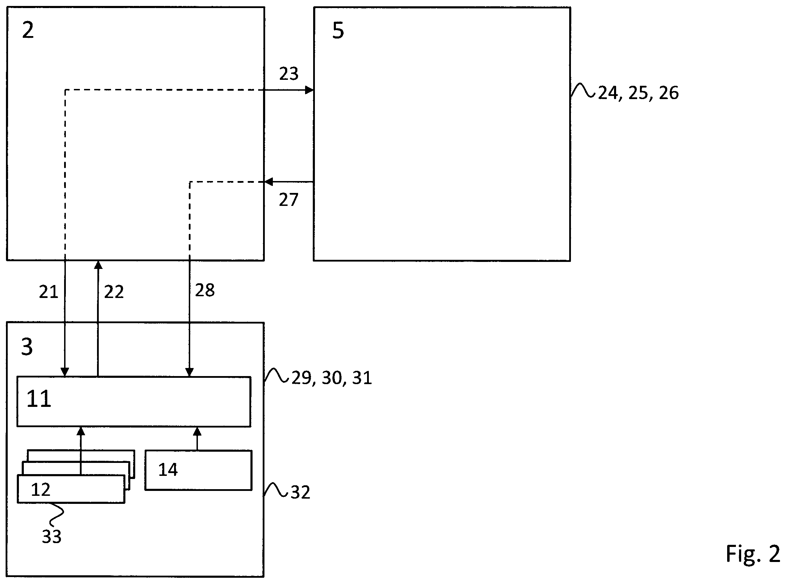

Fig. 2 illustriert den Ablauf einer Benutzerverifikation in mehreren Schritten:
Schritt 21: Sobald der Verifikationscontroller 2 (z.B. der BLE-Controller) feststellt, dass der Benutzer eine Benutzerverifikation mit einem Fingerabdruck beabsichtigt, fordert der Verifikationscontroller 2 mit dem GET_CHALLENGE-Kommando eine Challenge (z.B. eine Zufallszahl) von der Vermittleranwendung 11 im Sicherheitselement an.
Schritt 22: Die Vermittleranwendung 11 gibt die Challenge, die mit dem Nachrichtenauthentifizierungscode HMAC geschützt ist, an den Verifikationscontroller zurück.
Schritt 23: Der Verifikationscontroller 2 führt zur Prüfung des Fingerabdrucks das MATCH-Kommando mit der HMAC-gesicherten Challenge als Eingabeparameter aus und referenziert die Schlüssel EncKeyID und MacKeyID als zusätzliche Eingabeparameter.
Schritt 24: Der Fingerabdruckcontroller 5 prüft die Integrität der Challenge mit Hilfe der HMAC-Signatur.
Schritt 25: Der Fingerabdruckcontroller 5 führt die Benutzerverifikation mittels Fingerabdrucks durch, falls die HMAC-Signatur korrekt ist. Andernfalls wird dem Verifikationscontroller 2 eine Fehlermeldung mitgeteilt.
Schritt 26: Der Fingerabdruckcontroller 5 verschlüsselt den Benutzerverifikationsstatus (OK Match, No Match) und sichert diesen über einen Nachrichtenauthentifizierungscode (HMAC) mit Hilfe der Schlüssel EncKey und MacKey ab.
Schritt 27: Der Fingerabdruckcontroller 5 sendet den verschlüsselten und mit HMAC gesicherten Benutzerverifikationsstatus an den Verifikationscontroller 2 zurück.
Schritt 28: Der Verifikationscontroller 2 leitet den Benutzerverifikationsstatus als Autorisierungsinformationen an die Vermittleranwendung 11 auf dem Sicherheitselement 3 weiter.
Schritt 29: Die Vermittleranwendung 11 auf dem Sicherheitselement 3 prüft die HMAC-Signatur des empfangenen Benutzerverifikationsstatus.
Schritt 30: Falls die HMAC-Signatur gültig ist, wird der Benutzerverifikationsstatus von der Vermittleranwendung 11 entschlüsselt.
Schritt 31: Der entschlüsselte Benutzerverifikationsstatus wird in der Vermittleranwendung 11 gespeichert.
Schritt 32: Das Betriebssystem 14 des Sicherheitselements 3 erfragt den Benutzerverifikationsstatus von der Vermittleranwendung 11 zusammen mit den definierten AIDs und Regeln und prüft diese.
Schritt 33: Wenn die Benutzerverifikation erfolgreich war und die Anwendung 12 eine der definierten AIDs aufweist, erlaubt das Betriebssystem 14 die Selektion der Anwendung 12 bzw. die Transaktion mit der Anwendung 12.

Bei der Benutzerverifikation gemäß Fig. 2 wird der Benutzerverifikationsstatus im Sicherheitselement 3 gespeichert. Alternativ kann der Benutzerverifikationsstatus im Verifikationscontroller 2 gespeichert werden, z.B. im BLE-Controller. Dazu erzeugt der Verifikationscontroller 2 eine Challenge und einen entsprechenden Nachrichtenauthentifizierungscode, etwa einen HMAC-Code, führt ein MATCH-Kommando mit der HMAC-gesicherten Challenge als Eingabeparameter aus und referenziert die kryptographischen Schlüssel EncKeyID und MacKeyID als zusätzliche Eingabeparameter.

Der Fingerabdruckcontroller 5 prüft die Integrität der Challenge mit Hilfe der HMAC-Signatur und führt die Benutzerverifikation mittels Fingerabdrucks durch, falls die HMAC-Signatur korrekt ist. Andernfalls wird dem Verifikationscontroller 2 eine Fehlermeldung übergeben. Der Fingerabdruckcontroller 5 verschlüsselt dann den Benutzerverifikationsstatus (OK Match, No Match), sichert diesen über einen Nachrichtenauthentifizierungscode (HMAC) ab und sendet den verschlüsselten und mit HMAC gesicherten Benutzerverifikationsstatus an den Verifikationscontroller 2 zurück. Der Verifikationscontroller 2 prüft anschließend den Nachrichtenauthentifizierungscode des empfangenen Benutzerverifikationsstatus und entschlüsselt den Benutzerverifikationsstatus, falls die HMAC-Signatur gültig ist. Der entschlüsselte Benutzerverifikationsstatus wird schließlich im Verifikationscontroller 2 gespeichert.

Das MATCH-Kommando kann insbesondere zu den folgenden Ergebnissen führen:
- OK Ready:: Befehl empfangen; Warten auf Fingerabdruck auf dem Sensor;
- OK FP:: Finger auf dem Sensor detektiert;
- OK Match:: Die gewählte Vorlage stimmt mit dem Finger auf dem Sensor überein und Rückgabe des übereinstimmenden ID-Werts;
- NO Match:: Die gewählte Vorlage stimmt nicht mit dem Finger auf dem Sensor überein.

Der Sensorcontroller 4, der Fingerabdruckcontroller 5, der Verifikationscontroller 2 sowie die Vermittleranwendung 11 erfordern vorgespeicherte Schlüssel für Verschlüsselung und Nachrichtenauthentifizierungscodes, damit ein Kommando zur Benutzerverifikation ausgeführt werden kann. Die Speicherung dieser Schlüssel in den genannten Komponenten findet während der Herstellung der Vorrichtung 1 statt und wird durch ein KEY_LOCK-Kommando permanent gesetzt.

Für eine auf dem Verifikationscontroller 2 basierende Benutzerverifikation werden die Schlüssel im Verifikationscontroller 2 selbst gespeichert und von diesem gegen Überschreiben gesperrt. Für die Benutzerverifikation basierend auf dem Sicherheitselement werden die Schlüssel EncKeyID_1 [16 Bytes] und MacKeyID_1 [32 Bytes] im Sicherheitselement 3 und im Sensorcontroller 4 gespeichert. Für die Benutzerverifikation basierend auf dem Verifikationscontroller 2 werden die Schlüssel EncKeyID_2 und MacKeyID_2 im Verifikationscontroller 2 und im Sensorcontroller 4 gespeichert. Diese Schlüssel können nach der Ausführung des KEY_LOCK-Kommandos nicht mehr geändert werden.

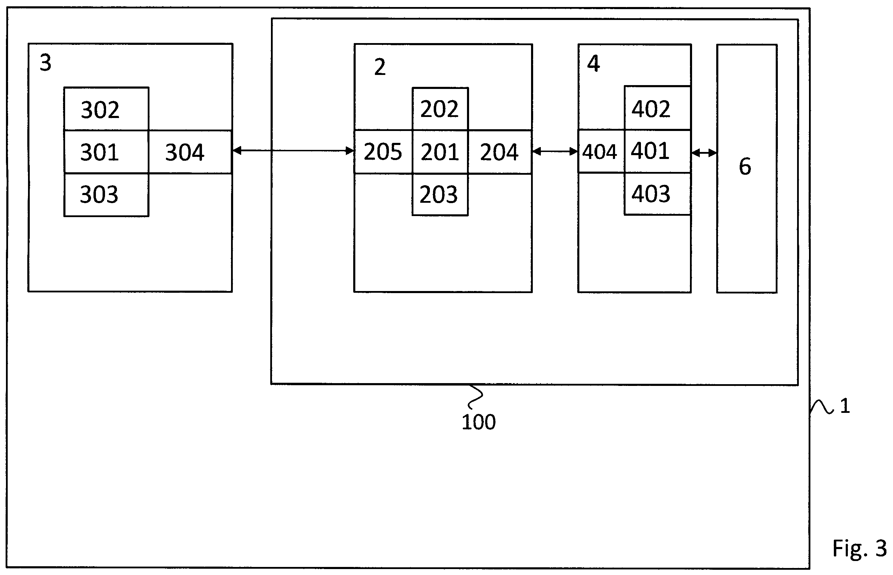

Fig. 3 zeigt die Vorrichtung 1 umfassend das Sicherheitselement 2 sowie das Benutzerverifikationselement 100 mit dem Verifikationscontroller 2, dem Sensor 6 und dem Sensorcontroller 4.

Der Verifikationscontroller 2 weist eine Prozessoreinheit 201, einen flüchtigen Speicher 202 und einen nichtflüchtigen Speicher 203 auf. Zudem weist der Verifikationscontroller 2 Kommunikationsschnittstellen 204 und 205 zur Verbindung mit dem Sensorcontroller 4 und dem Sicherheitselement 3 auf.

Das Sicherheitselement umfasst eine Prozessoreinheit 301, einen flüchtigen Speicher 302 und einen nichtflüchtigen Speicher 303 sowie eine Kommunikationsschnittstelle 304, die mit dem Verifikationscontroller 2 verbunden ist.

Der Sensorcontroller 4 weist eine Prozessoreinheit 401, einen flüchtigen Speicher 402, einen nichtflüchtigen Speicher 403 und eine Kommunikationsschnittstelle 404 auf, die mit dem Verifikationscontroller 2 verbunden ist.

Dabei ist das Benutzerverifikationselement 100 ausgestaltet und eingerichtet, um eine Benutzerverifikation mit Hilfe des Sensors 6 durchzuführen und den erhaltenen Benutzerverifikationsstatus als Autorisierungsinformationen verschlüsselt an die Vermittleranwendung 11 auf dem Sicherheitselement 3 zu übertragen. Insbesondere wird der Benutzerverifikationsstatus verschlüsselt vom Sensorkontroller 4 an den Verifikationskontroller 2 und von dort an das Sicherheitselement 3 übermittelt.

Das Sicherheitselement 3 ist dabei ausgestaltet und eingerichtet, den vom Benutzerverifikationselement 100 übermittelten, verschlüsselten Benutzerverifikationsstatus zu entschlüsseln.

Wenn eine Anwendung 12 auf dem Sicherheitselement 3 selektiert oder eine Transaktion mit Hilfe der Anwendung 12 durchgeführt werden soll, so wird auf dem Sicherheitselement 3 überprüft, ob die Anwendung 12 in der AID-Liste vorliegt. Wenn dies der Fall ist, so wird in der Blacklist überprüft, ob das erforderliche Kommando spezifischen Anforderungen genügen muss. Falls beispielsweise für das Kommando ein positiver Benutzerverifikationsstatus erforderlich ist, überprüft das Sicherheitselement 3 die vom Benutzerverifikationselement 100 übermittelten Informationen darauf, ob ein positiver Benutzerverifikationsstatus vorliegt, und führt oder unterlässt das Selektieren der Anwendung bzw. das Ausführen der Transaktion.

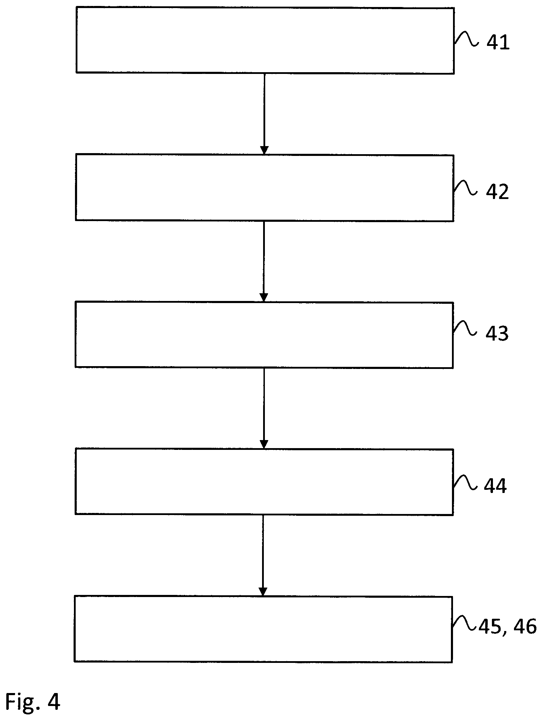

Fig. 4 illustriert abschließend die Schritte des erfindungsgemäßen Verfahrens zum Autorisieren einer auf einem Sicherheitselement 3 installierten Anwendung 12:
Schritt 41: Überprüfen, ob die Anwendung 12 in einer AID-Liste enthalten ist (optional);
Schritt 42: Übertragen von Autorisierungsinformationen von dem Benutzerverifikationselement 100 an das Sicherheitselement 3;
Schritt 43: Abgleichen der Autorisierungsinformationen gegenüber Anforderungen einer Liste auf dem Sicherheitselement 3;
Schritt 44: Speichern der Autorisierungsinformationen auf dem Sicherheitselement 3 (optional); und
Schritte 45, 46: Selektieren der Anwendung 12 auf dem Sicherheitselement 3 und/oder Durchführen einer Transaktion mit Hilfe der Anwendung 12, sofern die Autorisierungsinformationen die Anforderungen der Liste erfüllt.

## Patentansprüche

1. Verfahren zum Autorisieren einer auf einem Sicherheitselement (3), beispielsweise einer Chipkarte, Smart Card, eSE, eUICC-Karte oder dergleichen, einer Vorrichtung (1) installierten Anwendung (12), umfassend die folgenden Schritte:
- Übertragen (42) von Autorisierungsinformationen von einem Benutzerverifikationselement (100) der Vorrichtung (1) an das Sicherheitselement (3);
- Abgleichen (43) der Autorisierungsinformationen gegenüber zumindest einer Anforderung einer Liste auf dem Sicherheitselement (3); und
- Selektieren (45) der Anwendung (12) auf dem Sicherheitselement (3) und/oder Durchführen (46) einer Transaktion mittels der Anwendung (12), sofern die Autorisierungsinformationen die Anforderungen der Liste erfüllt.

2. Verfahren nach Anspruch 1, umfassend den Schritt des Bereitstellens einer Vorrichtung (1), die das Sicherheitselement (3) und das Benutzerverifikationselement (100) umfasst.

3. Verfahren nach Anspruch 1 oder 2, umfassend den Schritt des Übertragens (42) von Autorisierungsinformationen von zumindest einem weiteren Benutzerverifikationselement an das Sicherheitselement (3), wobei das zumindest eine weitere Benutzerverifikationselement separat von einer Vorrichtung (1) bereitgestellt wird, welche das Sicherheitselement (3) umfasst.

4. Verfahren nach einem der vorhergehenden Ansprüche, wobei als Liste eine Blacklist oder eine Protection-Trigger-Liste bereitgestellt wird.

5. Verfahren nach einem der vorhergehenden Ansprüche, wobei im Zusammenhang mit dem Schritt des Abgleichens (43) geprüft wird, ob die Anwendung (12) in einer AID-Liste verzeichnet ist.

6. Verfahren nach einem der vorhergehenden Ansprüche, wobei eine auf dem Sicherheitselement (3) installierte Vermittlungsanwendung (11) die Autorisierungsinformationen abspeichert (44) und die Schritte des Abgleichens (43) und des Selektierens (45) und/oder Durchführens (46) ausführt.

7. Verfahren nach einem der vorhergehenden Ansprüche, wobei beim Schritt des Abgleichens (43) geprüft wird, ob die Autorisierungsinformationen einen sicherheitsrelevanten Status betreffen, insbesondere einen positiven Benutzerverifikationsstatus.

8. Verfahren nach Anspruch 7, wobei der Benutzerverifikationsstatus mit Hilfe eines biometrischen Sensors (6) erzeugt wird, vorzugsweise mit Hilfe eines Fingerabdrucksensors (7).

9. Verfahren nach Anspruch 8, wobei der biometrische Sensor (6) als Bestandteil des Benutzerverifikationselements (100) bereitgestellt wird.

10. Verfahren nach Anspruch 8 oder 9, wobei nach dem Selektieren (45) der Anwendung und/oder dem Durchführen (46) der Transaktion der Benutzerverifikationsstatus zurückgesetzt wird, sodass ein weiteres Selektieren (45) und/oder Durchführen einer Transaktion (46) eine Benutzerverifikation erfordert.

11. Verfahren nach einem der vorhergehenden Ansprüche, wobei die Autorisierungsinformationen verschlüsselt übertragen werden.

12. Verfahren nach einem der vorherigen Ansprüche, wobei die Transaktion mittels des Sicherheitselements (3) kontaktlos durchgeführt wird (46).

13. Verfahren nach einem der vorherigen Ansprüche, wobei als Transaktion eine Authentisierungstransaktion, eine Bezahltransaktion und/oder eine Zugangskontrolltransaktion durchgeführt wird (46).

14. Vorrichtung (1) umfassend ein Benutzerverifikationselement (100) und ein Sicherheitselement (3), beispielsweise eine Chipkarte, Smart Card, eSE, eUICC-Karte oder dergleichen, mit einer auf dem Sicherheitselement (3) installierten Anwendung (12),
wobei
das Benutzerverifikationselement (100) eingerichtet ist, Autorisierungsinformationen an das Sicherheitselement (3) zu übertragen, und
das Sicherheitselement (3) eingerichtet ist, zum Autorisieren der Anwendung (12) die von dem Benutzerverifikationselement (100) empfangenen Autorisierungsinformationen gegenüber zumindest einer Anforderung einer Liste abzugleichen und die Anwendung (12) zu selektieren und/oder eine Transaktion mit Hilfe der Anwendung (12) durchzuführen, sofern die Autorisierungsinformationen die Anforderungen der Liste erfüllt.

15. Vorrichtung nach Anspruch 14, wobei die Vorrichtung eingerichtet ist, ein Verfahren nach einem der Ansprüche 1 bis 13 auszuführen.

## Claims

1. A method for authorising an application (12) installed on a security element (3), for example a chip card, smart card, eSE, eUICC card or the like, of a device (1), comprising the following steps:
- transmitting (42) authorisation information from a user verification element (100) of the device (1) to the security element (3);
- matching (43) the authorisation information against at least one requirement of a list on the security element (3); and
- selecting (45) the application (12) on the security element (3) and/or performing (46) a transaction by means of the application (12), provided that the authorisation information meets the requirements of the list.

2. The method according to claim 1, comprising the step of providing a device (1) comprising the security element (3) and the user verification element (100).

3. The method according to claim 1 or 2, comprising the step of transmitting (42) authorisation information from at least one further user verification element to the security element (3), wherein the at least one further user verification element is provided separately from a device (1) comprising the security element (3).

4. The method according to any one of the preceding claims, wherein a blacklist or a protection trigger list is provided as the list.

5. The method according to any one of the preceding claims, wherein, in connection with the step of matching (43), it is being checked whether the application (12) is listed in an AID list.

6. The method according to any one of the preceding claims, wherein a switching application (11) installed on the security element (3) stores (44) the authorisation information and carries out the steps of matching (43) and selecting (45) and/or performing (46).

7. Method according to one of the preceding claims, wherein in the step of matching (43) it is checked whether the authorisation information concerns a security-relevant status, in particular a positive user verification status.

8. The method according to claim 7, wherein the user verification status is generated with the aid of a biometric sensor (6), preferably with the aid of a fingerprint sensor (7).

9. The method according to claim 8, wherein the biometric sensor (6) is provided as a component of the user verification element (100).

10. The method according to claim 8 or 9, wherein after selecting (45) the application and/or performing (46) the transaction, the user verification status is reset, so that further selecting (45) and/or performing a transaction (46) requires user verification.

11. The method according to any one of the preceding claims, wherein the authorisation information is transmitted in an encrypted form.

12. The method according to any one of the preceding claims, wherein the transaction by means of the security element (3) is being performed contactlessly (46).

13. The method according to any one of the preceding claims, wherein the transaction is an authentication transaction, a payment transaction and/or an access control transaction (46).

14. A device (1) comprising a user verification element (100) and a security element (3), for example a chip card, smart card, eSE, eUICC card or the like, with an application (12) installed on the security element (3), wherein
the user verification element (100) is configured to transmit authorisation information to the security element (3), and
the security element (3) is configured to compare the authorisation information received from the user verification element (100) with at least one requirement of a list in order to authorise the application (12) and to select the application (12) and/or carry out a transaction with the aid of the application (12), provided that the authorisation information meets the requirement of the list.

15. The apparatus according to claim 14, wherein the apparatus is adapted to perform a method according to any one of claims 1 to 13.

## Revendications

1. Procédé, destiné à autoriser une application (12) installée sur un élément de sécurité (3), par exemple une carte à puce, une smart card, un eSE, une carte eUICC ou analogues d'un dispositif (1), comprenant les étapes suivantes, consistant à :
- transférer (42) vers l'élément de sécurité (3) des informations d'autorisation d'un élément de vérification (100) d'utilisateur du dispositif (1);
- comparer (43) les informations d'autorisation par rapport à au moins une exigence d'une liste sur l'élément de sécurité (3) ; et
- sélectionner (45) l'application (12) sur l'élément de sécurité (3) et/ou réaliser (46) une transaction au moyen de l'application (12), dans la mesure où les informations d'autorisation satisfont aux exigences de la liste.

2. Procédé selon la revendication 1, comprenant l'étape consistant à mettre à disposition un dispositif (1), qui comprend l'élément de sécurité (3) et l'élément de vérification (100) d'utilisateur.

3. Procédé selon la revendication 1 ou 2, comprenant l'étape consistant à transférer (42) des informations d'autorisation à partir d'au moins un élément de vérification d'utilisateur supplémentaire vers l'élément de sécurité (3), l'au moins un élément de vérification d'utilisateur supplémentaire étant mis à disposition séparément d'un dispositif (1), lequel comprend l'élément de sécurité (3).

4. Procédé selon l'une quelconque des revendications précédentes, en tant que liste étant mise à disposition une liste noire ou une liste de déclenchement d'une protection.

5. Procédé selon l'une quelconque des revendications précédentes, en relation avec l'étape consistant à comparer (43) étant vérifié si l'application (12) figure dans une liste AID.

6. Procédé selon l'une quelconque des revendications précédentes, une application de mise en relation (11) installée sur l'élément de sécurité (3) mémorisant (44) les informations d'autorisation et réalisant les étapes consistant à comparer (43) et à sélectionner (45) et/ou à réaliser (46).

7. Procédé selon l'une quelconque des revendications précédentes, lors de l'étape consistant à comparer (43) étant vérifié si les informations d'autorisation concernent un état déterminant en matière de sécurité, notamment un état de vérification d'utilisateur positif.

8. Procédé selon la revendication 7, l'état de vérification d'utilisateur étant généré à l'aide d'un capteur biométrique (6), de préférence à l'aide d'un capteur d'empreinte digitale (7).

9. Procédé selon la revendication 8, le capteur biométrique (6) étant mis à disposition en tant que partie intégrante de l'élément de vérification (100) d'utilisateur.

10. Procédé selon la revendication 8 ou 9, après la sélection (45) de l'application et/ou la réalisation (46) de la transaction, l'état de vérification d'utilisateur étant réinitialisé, de sorte qu'une sélection (45) et/ou une réalisation supplémentaire d'une transaction (46) requière une vérification de l'utilisateur.

11. Procédé selon l'une quelconque des revendications précédentes, les informations d'autorisation étant transférées sous forme cryptée.

12. Procédé selon l'une quelconque des revendications précédentes, la transaction étant réalisée (46) sans contact au moyen de l'élément de sécurité (3).

13. Procédé selon l'une quelconque des revendications précédentes, en tant que transaction étant réalisée (46) une transaction d'authentification, une transaction de paiement et/ou une transaction de contrôle d'accès

14. Dispositif (1), comprenant un élément de vérification (100) d'utilisateur et un élément de sécurité (3), par exemple une carte à puce, une smart card, un eSE, une carte eUICC ou analogue, avec une application (12) installée sur l'élément de sécurité (3),
l'élément de vérification (100) d'utilisateur étant configuré pour transférer des informations d'autorisation vers l'élément de sécurité (3) et
l'élément de sécurité (3) étant configuré pour autoriser l'application (12) à comparer des informations d'autorisation réceptionnées par l'élément de vérification (100) d'utilisateur par rapport à au moins une exigence d'une liste et à sélectionner l'application (12) et/ou à réaliser une transaction à l'aide de l'application (12), dans la mesure où les informations d'autorisation satisfont aux exigences.

15. Dispositif selon la revendication 14, le dispositif étant réalisé pour exécuter un procédé selon l'une quelconque des revendications 1 à 13.
